# EUROPEAN PATENT SPECIFICATION

(11) **EP 0 583 517 B1**
(45) Date of publication and mention of the grant of the patent: **12.11.1997**
(21) Application number: 92307473.6
(22) Date of filing: 14.08.1992
(51) Int. Cl.: B03B 1/00, B03B 9/00, C03C 1/02

(54) **Process for purifying silica sand and other materials**
Verfahren zur Reinigung von Quarzsand und anderen Materialien
Procédé pour la purification de sable siliceux et autres matières

(43) Date of publication of application: 23.02.1994
(73) Proprietor: MATERIAS PRIMAS MONTERREY S.A. DE C.V., Monterrey, N.L. (MX)
(72) Inventor: Aguirre-Villafana, Juan-Lauro, Ciudad Guadalupe, Nueyo Leon (MX); Leal-Gonzalez, Juan, Monterrey, Nueyo Leon (MX)
(74) Representative: Paget, Hugh Charles Edward

(56) References cited:
- DE-A- 3 312 869
- FR-A- 2 584 313
- GB-A- 2 192 805
- US-A- 3 054 230
- US-A- 3 690 622
- US-A- 4 401 638
- US-A- 4 405 588
- AUFBEREITUNGS TECHNIK vol. 28, no. 5, May 1987, WIESBADEN DE pages 271 - 277 H. BAUER 'Sand processing - Production of sands of extremely high purities'
- AUFBEREITUNGS TECHNIK vol. 28, no. 6, June 1987, WIESBADEN DE pages 336 - 339 H. BAUER 'Sand processing - Production of sands of extremely high purities'
- AUFBEREITUNGS TECHNIK vol. 32, no. 4, April 1991, WIESBADEN DE pages 181 - 188 E. SCHAPER 'Beneficiation of quartz sand - from raw material to finished
- product'
- CHEMICAL ABSTRACTS, vol. 112, no. 10, 5 March 1990, Columbus, Ohio, US; abstract no. 82546a, A. ANDREWS 'Canadian silica resources : a study of selected Quebec silica samples for glass and foundry sand'

## Description

This invention refers to a process for purifying silica sand and other materials and, more particularly, to a process for the elimination of iron, aluminosilicates and other impurities from silica sand particles.

Sand particles are normally contaminated with binder-type clay, iron, aluminosilicates and other impurities which have to be removed for particular uses in the glass, ceramic and other product manufacturing.

One of the most difficult impurities to release from the sand particles is the iron compound normally staining said particles.

There are some methods for the elimination of iron stains from the sand particles, mainly by mechanical attrition and by transforming the iron impurities into soluble iron salts by treatment with a chemical agent such as concentrated sulfuric acid or some alkalies.

FR-A-2584313 discloses a process for purifying silica sand consisting of abrasive-attritioning sand particles by subjecting them to centrifugal rotation under dry conditions. The abrasive-attritioning is carried out in a recipient having a rotary shaft carrying agitation blades. The rotary shaft being placed eccentrically within the recipient.

Aufbereitungs-Technik 28 (1987) Juni, No 6, discloses a process for removing impurities from silica sand. The process includes attrition with the addition of acid.

Chemical Abstracts, Vol 112, No 10: abstract 82546a provides a process for the removal of iron impurities from silica sand. The process includes attrition, scrubbing and washing. Further removal of impurities was achieved by reverse flotation.

Aufbereitungs-Technik 28 (1987) Mai, No. 5, describes a process where the iron impurities from abrasive-attritioned sand particles can be reduced by magnetic separation, screening or classification.

U.S. patents No. 4'405,588 and 4'401,638 (corresponding to mexican patents 159,830 and 159,831) of Caballero et al, each respectively disclose a process for removing impurities from silica sand particles, involving several steps of attrition and a chemical attack or lixiviation step which requires a relatively great amount of water and chemical reagents such as concentrated sulfuric acid, to remove said iron stains from said sand particles.

Said attrition steps combined with said chemical attack, were absolutely necessary in said processes because of the characteristics of the attrition which were not and cannot be vigorous enough in the existing methods as to remove the persistent iron stains.

Additionally, together with the sand there are also independent hard particles of aluminosilicates which, in the previous processes, were only polished and diminished in size by said attrition steps to be subsequently eliminated by additional flotation or screening steps.

It was therefore highly desirable to simplify the process by reducing at the minimum the number of attrition steps and also by suppressing the chemical attack or at least to reduce at the minimum the consumption of water and chemical reagents of said step.

Such simplification in the process for purifying silica sand is now possible in accordance with the present invention, by providing a new abrasive-attrition step in which the sand particles are so vigorously attritioned that wears the particle surface thus removing the iron stains therefrom, which may afterwards be eliminated from the sand particles preferably by high intensity magnetic separation.

Furthermore, the characteristics of said new abrasive-attrition step are so peculiar as to cause that said sand particles be so vigorously attritioned to each other that pulverize independent aluminosilicate and other softer contaminant particles which are finally eliminated simply by washing and/or screening.

The process for purifying silica sand, in accordance with the present invention, simplifies in this way the process by reducing, to one, the number of the conventional attrition steps and suppresses the necessity of the chemical attack, or at least allows to carry out said chemical attack in most soft conditions (simply in the presence of acid humidity), considerably reducing the consumption of water (at about 30%) and chemical reagents when high degree of purity is required for the sand.

Therefore, in accordance with the present invention there is provided a process for purifying silica sand and other materials comprising:
a) abrasive-attritioning a sand particle mixture by subjecting the sand particles to centrifugal rotation in a recipient;
b) simultaneously agitating the particles in said recipient by means of a rotary shaft placed eccentrically within the recipient, said rotary shaft having a plurality of blades extending at different levels from the shaft, wherein the sand particles are subjected to an abrasive action and the surface impurities removed from said sand particles; and
c) eliminating the impurities from the sand particles mixture;
   wherein:
   the recipient is an inclined rotary recipient, and a deflector is placed in contact with the inner wall of the rotary recipient, and the abrasive action is caused by the centrifugal rotation of the inclined rotary recipient and by downstream and upstream movements of the sand particles imparted by the inclined rotary recipient and by the blades rotating in said inclined rotary recipient.

It is therefore an object of the present invention, to provide a process for purifying silica sand and other materials, to eliminate or reduce impurities such as iron, aluminosilicates and other impurities contaminating it.

It is another object of the present invention, to provide a simplified process for purifying silica sand and other materials, by providing an abrasive-attrition step which is so vigorous that wears the surface of the sand particles thus removing the iron staining them which may afterwards be easily eliminated from said sand particles.

It is also an object of the present invention, to provide a simplified process for purifying silica sand and other materials, of the above disclosed nature, wherein the abrasive-attrition step is so peculiar as to cause that said sand particles be so vigorously attritioned to each other that pulverize independent aluminosilicate and other contaminant particles which are finally eliminated simply by washing and/or screening.

it is still an object of the present invention, to provide a simplified process for purifying silica sand and other materials, of the above disclosed nature, which simplifies the process by reducing, to one, the number of the conventional attrition steps of the conventional processes

It is a further object of the present invention, to provide a simplified process for purifying silica sand and other materials, of the above disclosed nature, which allows to suppress the necessity of the chemical attack, or at least allows to carry it out under most soft conditions considerably reducing the consumption of water and chemical reagents when high degree of purity is required for the sand.

These and other objects and advantages of the present will be evident to the persons skilled in the art, from the teachings of the present invention described in the following detailed, non-limitative description of the invention, provided in combination with the accompanying drawings.

Figure 1 is a flow sheet of the process for purifying silica sand or other materials, of the present invention.

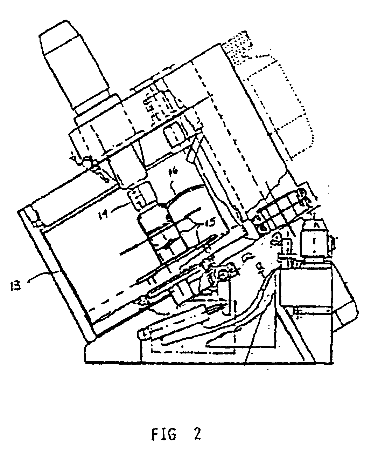

Figure 2 is a schematic view of the apparatus for abrasive-attrition, to be used in the process of the present invention.

In the following, the invention will be described in combination with the accompanying drawings wherein the same reference numbers refer to the same parts of the shown figures.

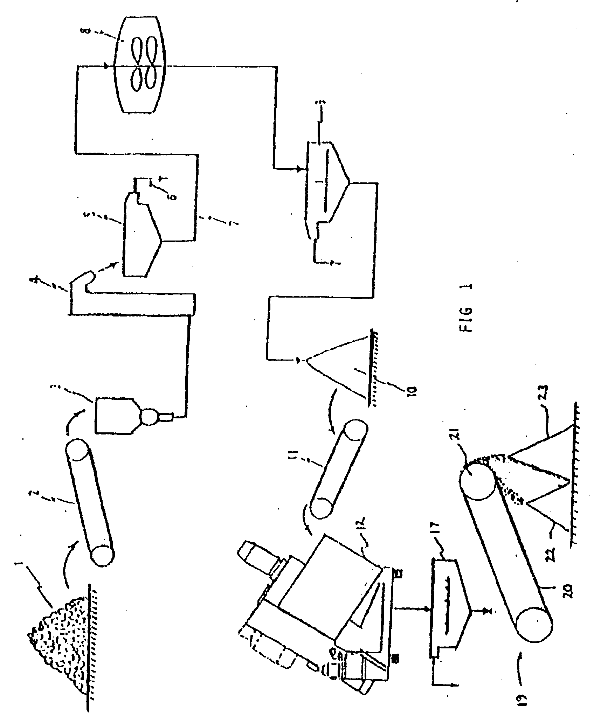

Referring to Figure 1, the process for purifying silica sand and other materials, of the present invention comprises:
feeding sandstone 1 by means of conveyor 2 into a grinder or crusher 3, to uniformly reduce the size of sand particles;
transferring said ground and classified sand particles by a conveyor 4, to a washing tank 5 wherein said sand particles are washed with cold water forming an aqueous suspension of clay-binder material which is extracted through line 6, whereas the heavier sand particles having still adhered some clay-binder is passed trough line 7 to an attrition scrubber 8 to deslime and release additional clay-binder;
feeding said sand particles to a deslimer 9 to finally remove the binder from said sand particles which are passed to a deposit 10;
transporting, by means of conveyor 11, said deslimed sand particles from the deposit 10 to an abrasive-attritioner 12 comprising an inclined rotary recipient 13 having a rotary shaft 14 placed eccentrically within recipient 13, including a plurality of rotary blades 15 at different levels thereof and a vertical deflector 16 placed in contact with the inner wall of the rotary recipient 13, to subject the sand particles to an abrasive action caused by the downstream and upstream movements of the sand particles in said inclined rotary recipient 13 and by the abrasive friction of the sand particles against said revolving blades 15, wearing the surface of the sand particles removing the iron stains and crushing and pulverizing in this way the aluminosilicate particles;
finally passing said sand particles from said abrasive-attritioner 12 to a washer tank 17 wherein it is washed with cold water to remove the aluminosilicates which remain as a suspension which is extracted through line 18, while the sand particles and ferrous particles separated therefrom are passed to a magnetic separator 19 comprising conveyor 20 having magnetic rollers 21 which adheres the ferrous particles which are afterwards released in deposit 22, whereas the sand particles free of impurities goes down by gravity immediately after the separating conveyor 20, in a deposit 23.

### EXAMPLES.

Batches of about 8 Kg. of ground and classified silica sand were treated in an intensive countercurrent mixer, normally used for mixing purposes and which was modified and adapted to be utilized in this process, using a tangential velocity of 31.2 m/seg. In this equipment two samples of sand from "Lampazos" and two samples of "Jaltipan" were processed in dry conditions with 100% of solids, varying the times of abrasive-attrition from 2.5 to 10 minutes.

The starting temperature of the sand was of 10°C and was gradually increased at 42°C at the first 2.5 min.; at 56°C at the 5 min.; at 67°C at the 7.5 min.; and finally at 75°C at the 10 min.

The results obtained in the four tests are shown in the next table, wherein the batch of sand particles with an initial content of impurities is designed as HEAD and afterwards are shown the results after the abrasive-attrition and magnetic separation in accordance with the present invention.

### SAND OF "LAMPAZOS":

| TEST 1. | | |
|---|---|---|
| | Fe₂O₃ | Al₂O₃ |
| HEAD | 0.087 | 0.745 |
| ABRASIVE-ATTRITION + WASHING (# 120) | 0.047 | 0.450 |
| AFTER MAGNETIC SEPARATION | 0.031 | 0.440 |

| TEST 2. | | |
|---|---|---|
| | Fe₂O₃ | Al₂O₃ |
| HEAD | 0.077 | 0.730 |
| ABRASIVE-ATTRITION + WASHING (# 120) | 0.043 | 0.730 |
| AFTER MAGNETIC SEPARATION | 0.032 | 0.460 |

### SAND OF "JALTIPAN":

| TEST 3. | | |
|---|---|---|
| | Fe₂O₃ | Al₂O₃ |
| HEAD | 0.200 | 0.375 |
| ABRASIVE-ATTRITION + WASHING (# 140) | 0.125 | 0.150 |
| AFTER MAGNETIC SEPARATION | 0.024 | 0.150 |

| TEST 4. | | |
|---|---|---|
| | Fe₂O₃ | Al₂O₃ |
| HEAD | 0.200 | 0.375 |
| ABRASIVE-ATTRITION + WASHING (# 140) | 0.150 | 0.180 |
| AFTER MAGNETIC SEPARATION | 0.022 | 0.170 |

As it is evident from the above test results, after abrasive-attrition and washing, the contents of Al₂O₃ is reduced to approximately to one half. This is due mainly to the feldspar particles which were ground by the sand particles reduced to a powder, while in the magnetic separation practically did not reduced its content.

Regarding to the impurities of Fe₂ O₃ , these were also practically reduced to the half after abrasive-attrition and washing at 120 and 140 meshes, corresponding to the ferrous fine particles removed from the surface of the sand particles.

In the sand of "Lampazos", after magnetic separation, the contents of Fe₂ O₃ were reduced additionally in a 25%, while in the sand of "Jaltipan" were reduced at 80% corresponding so much to the free ferrous minerals as to the iron particles originated by the wear of the equipment.

Finally, it must be understood that the persons skilled in the art can be able, from the teachings of the present invention, to make changes in the operation conditions and in the steps of the process which, however, will clearly be within the true scope of the invention as it is claimed in the following claims.

## Claims

1. A process for purifying silica sand and other materials, comprises:
a) abrasive-attritioning a sand particle mixture by subjecting the sand particles to centrifugal rotation in a recipient;
b) simultaneously agitating the particles in said recipient by means of a rotary shaft placed eccentrically within the recipient, said rotary shaft having a plurality of blades extending at different levels from the shaft, wherein the sand particles are subjected to an abrasive action and the surface impurities removed from said sand particles; and
c) eliminating the impurities from the sand particles mixture;
characterised in that:
the recipient is an inclined rotary recipient, and a deflector is placed in contact with the inner wall of the rotary recipient, and the abrasive action is caused by the centrifugal rotation of the inclined rotary recipient and by downstream and upstream movements of the sand particles imparted by the inclined rotary recipient and by the blades rotating in said inclined rotary recipient.

2. A process for purifying silica sand and other materials, as claimed in claim 1, wherein the abrasive-attrition step is carried out in the presence of humidity.

3. A process for purifying silica sand and other materials, as claimed in claim 1 or claim 2, wherein the abrasive-attrition step is carried out in the presence of acidified or alkalinized water.

4. A process for purifying silica sand and other materials, as claimed in any one of the preceding claims further comprising washing said abrasive-attritioned sand particles to remove the iron, aluminosilicate and other impurities.

5. A process for purifying silica sand and other materials, according to any one of the preceding claims, wherein elimination of iron impurities from said abrasive-attritioned sand particles is carried out by magnetic separation.

6. A process for purifying silica sand and other materials, according to any one of claims 1 to 4 wherein elimination of iron impurities from said abrasive-attritioned sand particles is carried out by flotation.

7. A process for purifying silica sand and other materials, according to any one of claims 1 to 4, wherein elimination of iron impurities from said abrasive-attritioned sand particles is carried out by hydroclassification.

8. A process for purifying silica sand and other materials, according to any one of claims 1 to 4, wherein elimination of iron impurities from said abrasive-attritioned sand particles is carried out by screening.

## Patentansprüche

1. Verfahren zur Reinigung von Quarzsand und anderer Materialien, umfassend die folgenden Schritte:
a) Unterziehen eines Sandteilchengemisches einer mechanischen Abrasion, indem die Sandteilchen in einem Behälter einer Zentrifugalrotation ausgesetzt werden;
b) gleichzeitiges Bewegen der Teilchen im Behälter mittels einer exzentrisch im Behälter angeordneten Drehwelle, die eine Vielzahl Schaufeln aufweist, die sich auf verschiedenen Höhen von der Welle weg erstrecken, wobei die Sandteilchen einer Abrasivbehandlung unterzogen und Oberflächenverunreinigungen von den Sandteilchen entfernt werden; und
c) Entfernen der Verunreinigungen aus dem Sandteilchengemisch;
dadurch gekennzeichnet, dass:
der Behälter ein geneigter Drehbehälter ist, ein Ablenker so positioniert ist, dass er die Innenwand des Drehbehälters berührt, und die Abrasivbehandlung durch die Zentrifugalrotation des geneigten Drehbehälters sowie durch Aufwärtsströmungs- und Abwärtsströmungsbewegungen der Sandteilchen, die durch den geneigten Drehbehälter und die im geneigten Drehbehälter rotierenden Schaufeln erzeugt werden, bewirkt wird.

2. Verfahren zum Reinigen von Quarzsand und anderer Materialien nach Anspruch 1, worin der Abrasionsschritt in Gegenwart von Feuchtigkeit durchgeführt wird.

3. Verfahren zum Reinigen von Quarzsand und anderer Materialien nach Anspruch 1 oder 2, worin der Abrasionsschritt in Gegenwart von angesäuertem oder alkalisch gemachtem Wasser durchgeführt wird.

4. Verfahren zum Reinigen von Quarzsand und anderer Materialien nach einem der vorhergehenden Ansprüche, weiters umfassend das Waschen der der Abrasivbehandlung unterzogenen Sandteilchen, um das Eisen, Aluminiumsilikat und andere Verunreinigungen zu entfernen.

5. Verfahren zum Reinigen von Quarzsand und anderer Materialien nach einem der vorhergehenden Ansprüche, worin die Entfernung von Eisenverunreinigungen aus den der Abrasivbehandlung unterzogenen Sandteilchen durch Magnetscheidung enfolgt.

6. Verfahren zum Reinigen von Quarzsand und anderer Materialien nach einem der Ansprüche 1 bis 4, worin die Entfernung von Eisenverunreinigungen aus den der Abrasivbehandlung unterzogenen Sandteilchen durch Flotation erfolgt.

7. Verfahren zum Reinigen von Quarzsand und anderer Materialien nach einem der Ansprüche 1 bis 4, worin die Entfernung von Eisenverunreinigungen aus den der Abrasivbehandlung unterzogenen Sandteilchen durch Hydroklassierung erfolgt.

8. Verfahren zum Reinigen von Quarzsand und anderer Materialien nach einem der Ansprüche 1 bis 4, worin die Entfernung von Eisenverunreinigungen aus den der Abrasivbehandlung unterzogenen Sandteilchen durch Sieben erfolgt.

## Revendications

1. Procédé pour la purification de sable siliceux et autres matières, qui comprend :
a) l'attrition par abrasion d'un mélange de particules de sable en soumettant les particules de sable à une rotation centrifuge dans un récipient ;
b) l'agitation simultanée des particules dans ledit récipient au moyen d'un arbre rotatif placé excentriquement dans le récipient, ledit arbre rotatif ayant un certain nombre de pales s'étendant à des niveaux différents de l'arbre, où les particules de sable sont soumises à une action d'abrasion et les impuretés de surface sont retirées desdites particules de sable ; et
c) l'élimination des impuretés du mélange des particules de sable ;
caractérisé en ce que :
le récipient est un récipient rotatif incliné, et un déflecteur est placé en contact avec la paroi interne du récipient rotatif et l'action abrasive est provoquée par la rotation centrifuge du récipient rotatif incliné et par les mouvements vers l'aval et vers l'amont des particules de sable qui sont impartis par le récipient rotatif incliné et par les pales tournant dans ledit récipient rotatif incliné.

2. Procédé pour la purification de sable siliceux et autres matières, selon la revendication 1, où l'étape d'attrition par abrasion est effectuée en présence d'humidité.

3. Procédé pour la purification de sable siliceux et autres matières, selon la revendication 1 ou 2, où l'étape d'attrition par abrasion est effectuée en présence d'eau acidifiée ou alcalinisée.

4. Procédé pour la purification de sable siliceux et autres matières, selon l'une quelconque des revendications précédentes, consistant de plus à laver lesdites particules de sable ayant subi une attrition par abrasion pour éliminer le fer, l'aluminosilicate et d'autres impuretés.

5. Procédé pour la purification de sable siliceux et autres matières, selon l'une quelconque des revendications précédentes, où l'élimination des impuretés de fer desdites particules de sable ayant subi une attrition abrasive est effectuée par séparation magnétique.

6. Procédé pour la purification de sable siliceux et autres matières, selon l'une quelconque des revendications 1 à 4, où l'élimination des impuretés de fer desdites particules de sable ayant subi l'attrition abrasive est effectuée par flottation.

7. Procédé pour la purification de sable siliceux et d'autres matières, selon l'une quelconque des revendications 1 à 4, où l'élimination des impuretés de fer desdites particules de sable ayant subi l'attrition abrasive est effectuée par hydroclassification.

8. Procédé pour la purification de sable siliceux et autres matières, selon l'une quelconques des revendications 1 à 4, où l'élimination des impuretés de fer desdites particules de sable ayant subi l'attrition abrasive est effectuée par criblage.
